# EUROPÄISCHE PATENTSCHRIFT

(11) **EP 3 826 123 B1**
(45) Veröffentlichungstag und Bekanntmachung des Hinweises auf die Patenterteilung: **01.05.2024**
(21) Anmeldenummer: 20207650.1
(22) Anmeldetag: 13.11.2020
(51) Int. Cl.: H02G 3/12

(54) **INSTALLATIONSDOSE**
INSTALLATION BOX
BOÎTE D'INSTALLATION

(30) Priorität: 20.11.2019 DE 102019131367
(43) Veröffentlichungstag der Anmeldung: 26.05.2021
(73) Patentinhaber: Kaiser GmbH & Co. KG, 58579 Schalksmühle (DE)
(72) Erfinder: KASSÜHLKE, Rüdiger, 57482 Wenden (DE); RÜTHER, Andreas, 58511 Lüdenscheid (DE)
(74) Vertreter: Rentsch Partner AG

(56) Entgegenhaltungen:
- EP-A1- 3 125 384
- EP-A1- 3 159 988
- EP-A2- 2 330 704
- DE-A1- 19 609 711
- DE-A1-102013 112 305
- DE-U1-202018 100 433
- FR-A1- 3 000 309
- FR-A1- 3 010 246
- NL-C2- 2 006 687

## Beschreibung

Die vorliegende Erfindung bezieht sich auf eine Installationsdose, insbesondere auf eine Hohlwanddose für Massivbaustoffe.

Im Stand der Technik ist bekannt, in Wände, Hohlwände oder auch in eine wärmegedämmte Wandung oder Fassade von Gebäuden Elektroinstallationen einzubringen. Insbesondere bei Hohlwänden aber auch bei anderen Wandungen oder Fassaden ist es üblich, hinter der entsprechenden Wandung oder in einem Hohlraum hinter der Hohlwand elektrische Kabel zuzuführen, die in bestimmten Bereichen aus der Wand herausgeführt werden. In diesen Bereichen werden Installationsdosen angeordnet, um beispielsweise Schalter, Steckdosen oder ähnliche elektrische Installationselemente anzubringen. Beispielsweise wird vor einer Gebäudewand mit Abstand eine ein- oder mehrschichtige Hohlwand aus Holzplatten oder einer Kombination von Gipskartonplatten und Holzplatten angebracht. Um in eine solche Wandung eine Installationsdose einzubringen, wird mit einem geeigneten Werkzeug eine Wandöffnung eingebracht. In eine solche Wandöffnung wird eine Installationsdose eingesetzt, die dann rückseitig mit verlegten elektrischen Kabeln verbunden werden kann.

Zur Befestigung solcher Installationsdosen sind Haltevorrichtungen bekannt, welche vorderseitig der Installationsdose mittels Stellschrauben betätigt werden können, um die Haltevorrichtungen gegen die Rückseite der Hohlwand anzuziehen und die Installationsdose in der Wandöffnung zu fixieren. Ein Beispiel solcher herkömmlichen Installationsdosen ist die DE4324058 veröffentlicht 1995 in Namen derselben Anmelderin oder die DE4428811 veröffentlicht 1996 in Namen der Günther Spelsberg GmbH & Co KG.

Die AT520425, veröffentlicht 2019 in Namen von OBO Bettermann Hungary KFT, offenbart eine Hohlwanddose mit in radialer Richtung ausstellbaren Klemmkörpern zum Befestigen der Installationsdose in einer Wandöffnung. Die Klemmkörper sitzen ebenfalls je auf einem Gewindeschaft einer Stellschraube. Der Dosenkörper umfasst zudem an seiner äusseren Mantelfläche einen umlaufenden Ringkörper aus einem gegenüber dem Kunststoffmaterial eines Dosenkörpers weicheren elastomeren Kunststoffmaterial. An der äusseren Mantelfläche des Ringkörpers können Strukturen, wie beispielsweise umlaufende oder quer zur Umlaufsrichtung verlaufende Rippen, Noppen oder andere umlaufende Strukturen angeformt sein.

Andere Hohlwanddosen sind von DE19609711A1 und NL2006687C2 bekannt.

Die aus dem Stand der Technik bekannten Installationsdosen sind aufwendig zu installieren. Zudem wird häufig kein sicherer Sitz der Installationsdose in mehrschichtigen Hohlwänden oder bei dünnen Hohlwänden erreicht.

### BESCHREIBUNG DER ERFINDUNG

Eine Aufgabe der Erfindung besteht darin eine Installationsdose bereitzustellen, welche einfach und schnell zu montieren ist. Eine weitere Aufgabe der Erfindung ist es eine Installationsdose mit einer verbesserten Dichtung bereitzustellen.

Eine erfindungsgemäße Installationdose ist im unabhängigen Anspruch 1 definiert. Bevorzugte Ausführungsformen sind in den abhängigen Ansprüchen 2-17 definiert. Eine Installationsdose für elektrotechnische Installationen gemäss der Erfindung umfasst einen Dosenkörper aus einem ersten Kunststoff. Der Dosenkörper umfasst einen Dosenboden, welcher in eine röhrenförmige Seitenwand übergeht, welche sich in axialer Richtung erstreckt und einen Installationsraum umgibt. Zwischen dem Dosenboden und der Seitenwand kann ein abgeschrägter Übergangsbereich vorhanden sein. Der Dosenkörper umfasst weiter eine Installationsöffnung, welche dem Dosenboden gegenüberliegend angeordnet ist und von einem radial nach aussen vorstehenden Rand der Seitenwand begrenzt ist. Der Rand dient zur Auflage an der Wand. Die Installationsdose umfasst weiter ein oder mehrere Verankerungselemente zum Befestigen der Installationsdose in einer Wandöffnung. Die Verankerungselemente stehen von der Aussenseite der Seitenwand ab und sind über den Umfang der Seitenwand verteilt angeordnet. Mit Vorteil sind die Verankerungselemente in der Nähe der Installationsöffnung, d.h. in einem vorderseitigen Bereich der Installationsdose, angeordnet. Vorteilhafterweise ist der vorderseitige Bereich in einem in der Wand montierten Zustand von der ein- oder mehrschichtigen Hohlwand umgeben, während ein rückseitiger Bereich der Installationsdose im montierten Zustand in einem Hohlraum hinter der Hohlwand angeordnet ist. Der vorderseitige Bereich kann je nach Ausgestaltung die vorderseitige Hälfte der Installationsdose umfassen. Jedoch sind auch andere Abmasse möglich, wie beispielsweise die vorderen 21 %, 30% oder 40% der Seitenwand (in axialer Richtung und gemessen vom Rand aus). Eine Anordnung der Verankerungselemente in der Nähe der Installationsöffnung bewirkt, dass die Verankerungselemente in eine Hohlwand eingreifen können, wenn diese dort verbaut wird. Die Verankerungselemente können in mindestens zwei in axialer Richtung voneinander beabstandeten Reihen angeordnet sein. Die Anzahl von Verankerungselementen pro Reihe nimmt hierbei mit Vorteil in axialer Richtung und von der Installationsöffnung weg ab. Diese Verteilung der Verankerungselemente bedingt sich durch die Auslegung für eine vorteilhafte, universale Anwendung der Installationsdose für unterschiedliche Hohlwände, wie z.B. verschiedene mehrschichtige Hohlwände. Weiterhin vorteilhaft ist, wenn die Verankerungselemente über den Umfang verteilt angeordnet sind, d.h. auch die Verankerungselemente der unterschiedlichen Reihen in Bezug auf den Umfang zueinander versetzt angeordnet sind.

Mit Vorteil ist die eine oder sind die mehreren Verankerungselemente derart ausgestaltet, dass die Kraft zum Einstecken der Installationsdose in die Wandöffnung geringer ist als die Kraft zum Entnehmen der Installationsdose aus der Wandöffnung. Dies kann erreicht werden, wenn die Verankerungselemente in dem montierten Zustand einen Widerhaken in der Wand in die axiale Richtung und in Richtung der Installationsöffnung ausbilden. Beispielsweise kann das Verankerungselement oder können die mehren Verankerungselemente hierzu lamellenartig und/oder keilförmig und/oder mit mindestens einem Sägezahn ausgebildet sein, wie nachstehend beschrieben.

Je nach Anwendung kann das Verankerungselement oder die mehreren Verankerungselemente dünnwandig und/oder lamellenartig ausgestaltet sein, sodass dieses von der Seitenwand der Installationsdose absteht. Mit Vorteil sind die Basen der Verankerungselemente, mit welchem diese an der Seitenwand befestigt sind und in diese übergehen, parallel zum Rand der Installationsöffnung angeordnet. Je nach Ausgestaltung können die Verankerungselemente sich weiter in einer Ebene parallel zum Rand der Installationsöffnung erstrecken oder winkelig von der Seitenwand abstehen. Beispielsweise können die dünnwandigen Verankerungselemente in Richtung der Installationsöffnung geneigt von der Seitenwand abstehen. Für einen besseren Halt in der Wand, sind die Verankerungselemente unter Krafteinwirkung (beim Einstecken der Installationsdose) zumindest bereichsweise plastisch und optional zusätzlich elastisch verformbar, sodass die Installationsdose schwerer aus der Wand zu entfernen ist. Beispielsweise können die Verankerungselemente derart verformt werden, dass die Verankerungselemente nach der Montage stärker in Richtung der Installationsöffnung geneigt sind und folglich mehr Kraft benötigt wird um die Installationsdose wieder aus der Wandöffnung zu lösen. Hierfür können die Verankerungselemente an ihrer Basis einen definierten Verformungsbereich für die plastische und/oder elastische Deformation aufweisen. Um die kontrollierte Deformation der Verankerungselemente beim Einbau zu begünstigen können die Verankerungselemente an ihrer Basis auf der von der Installationsöffnung weggewandten Seite einen grösseren Übergangsradius zur Seitenwand aufweisen als auf der zu der Installationsöffnung hingewandten Seite. Mit Vorteil besteht das mindestens eine Verankerungselement aus dem ersten Kunststoff. Je nach Anwendung kann dieses jedoch alternativ ebenfalls den zweiten weichelastischen Kunststoff umfassen. Auch Ausgestaltungen mit mehreren Verankerungselementen aus beiden bzw. unterschiedlichen Kunststoffen sind denkbar.

Alternativ oder ergänzend können die Verankerungselemente an einer von der Seitenwand abgewandten äusseren Seite Sägezähne aufweisen, welche eine Verankerung in dem Material der Hohlwand und in der Hohlwandöffnung ermöglichen. Ein guter Halt wird erzielt, wenn die (Spitzen der) Sägezähne in Richtung der Installationsöffnung geneigt ausgerichtet sind um den beschriebenen Effekt eines Widerhakens auszubilden. Die Verankerungselemente können beispielsweise jeweils mehrere in axialer Richtung hintereinander angeordnete Sägezähne aufweisen.

Alternativ oder ergänzend kann das Verankerungselement oder die Verankerungselemente ebenfalls eine Keilform aufweisen. Der Keil kann eine von der Seitenwand abgehendende Schulter umfassen. Die Schulter bildet eine Schulterfläche aus, welche winkelig zur axialen Richtung angeordnet ist. Mit Vorteil zeigt die Schulter des Keils in Richtung der Installationsöffnung. Die von dem Keil ausgebildete Schulter an der Aussenseite der Seitenwand bildet so den Widerhaken in die axiale Richtung in dem montierten Zustand in der Wand.

Je nach Ausführung kann die Installationsdose mindestens eine Klemmrippe umfassen um die Installationsdose zumindest bereichsweise in der Wandöffnung einzuklemmen. Mit Vorteil erstreckt sich die Klemmrippe in die axiale Richtung, jedoch sind auch andere Ausrichtungen denkbar. Die mindestens eine Klemmrippe ist mit Vorteil in dem rückseitigen Bereich der Installationsdose angeordnet, sodass die Installationsdose zunächst rückseitig in der Wandöffnung mittels der Klemmrippen vorpositioniert werden kann. Beispielsweise können die Klemmrippen an der Aussenseite der Seitenwand zwischen den Verankerungselementen und dem Dosenboden angeordnet sein. Die Anordnung ermöglicht es, dass die Klemmrippen die Installationsdose während der Montage und vor dem Eingreifen der Verankerungselemente in der Wandöffnung vorpositionieren und/oder vorfixieren. Für eine gleichmässige um den Umfang verteilte Klemmkraft und eine daraus resultierende gute Vorpositionierung, können multiple um den Umfang der Seitenwand verteilte Klemmrippen verwendet werden. Die Klemmrippen können derart dimensioniert werden, dass die Installationsdose mit den Klemmrippen genau in die Wandöffnung passt, sodass die Klemmrippen die Wandöffnung beim Einklemmen eines Bereiches der Installationsdose nicht beschädigt. Mit Vorteil erstrecken sich die Verankerungselemente jedoch in eine radiale Richtung weiter über eine Kontur der Aussenseite als die mindestens eine Klemmrippe, da die Verankerungselemente (im Gegensatz zu den Klemmrippen) in die Wand eingreifen.

Weiterhin umfasst die Installationsdose mindestens eine entlang der Seitenwand verlaufenden Dichtung, zum Abdichten des Dosenkörpers bezüglich der Wandöffnung. Mit Vorteil umfasst die mindestens eine Dichtung einen zweiten, weichelastischen Kunststoff, oder besteht aus diesem. Weitere Teile der Installationsdose können aus diesem zweiten, weichelastischen Kunststoff bestehen. Mit Vorteil umfasst die mindestens eine Dichtung mindestens eine bezüglich der Seitenwand umlaufende Lamelle. Die Lamellen stehen mit Vorteil von der Seitenwand ab und können sich im Wesentlichen parallel zum Rand der Installationsdose erstrecken. Mit Vorteil umfasst die mindestens eine Dichtung mehrere Lamellen, welche sich in axialer Richtung nebeneinander erstecken. Für eine gute Dichtwirkung kann sich die mindestens eine Dichtung in die radiale Richtung über die Verankerungselemente und/oder die mindestens eine Klemmrippe erstrecken. Weiterhin ist es vorteilhaft für die Dichtwirkung als auch aus optischen Gründen, wenn der Rand der Installationsdose sich über die mindestens eine Dichtung (und somit über die Verankerungselemente und/oder die mindestens eine Klemmrippe) erstreckt.

Bei der Verwendung der Installationsdose in einer zweischichtigen Hohlwand aus beispielsweise einer ersten Schicht aus Gipskarton und einer zweiten Schicht aus Holz (z.B. einer Spanholzplatte) sind mit Vorteil sind zwei Dichtungen vorhanden. Auf diese Weise dichtet die Installationsdose in Bezug zu der Wandöffnung (in welcher diese angebracht ist) verlässlich ab. Die verbesserte Dichtwirkung kann hierbei durch die zwei zueinander (in axialer Richtung) beabstandeten Dichtungen erzeugt werden. Besonders vorteilhaft ist es, wenn die erste Dichtung derart angeordnet ist, dass die Installationsdose gegen eine erste Schicht der Hohlwand abdichtet und die zweite Dichtung derart angeordnet ist, dass die Installationsdose gegen die unter der ersten Schicht liegende zweite Schicht abdichtet. Für einen gleichzeitig guten Halt und/oder eine universale Anwendung der Installationsdose in unterschiedlich aufgebauten Hohlwänden ist es vorteilhaft, wenn in axialer Richtung zwischen den zwei zueinander beabstandeten Dichtungen mindestens ein Verankerungselement, insbesondere mehrere Reihen von Verankerungselementen, angeordnet sind.

Erfindungsgemäss weist die Installationsdose eine Dichtung auf, welche zu dem Rand beabstandet ist, wobei die Installationsdose zwischen dem Rand und der Dichtung Verankerungselemente aufweist.

Besonders von Vorteil ist es, wenn eine erste Dichtung (für die erste Schicht der Hohlwand) in axialer Richtung zwischen mindestens einem Verankerungselement und dem Rand angeordnet ist. Mit Vorteil verläuft die erste Dichtung entlang dem Rand. In diesem Fall ist dann eine zweite Dichtung (für die zweite Schicht der Hohlwand) in axialer Richtung von dem Rand beabstandet, wobei mindestens ein Verankerungselement zwischen dem Rand und der zweiten Dichtung angeordnet ist.

Zum einfachen Einbau in die Wandöffnung kann die Installationsdose mindestens ein Positioniermittel zum Ausrichten der Installationsdose in einer Wandöffnung umfassen. Das mindestens eine Positioniermittel kann auf der Aussenseite zwischen der mindestens einen Klemmrippe und dem ein oder mehreren Verankerungselementen angeordnet sein. Mit Vorteil ist das mindestens eine Positioniermittel in Bezug auf den Umfang an der gleichen Position angeordnet, wie ein Befestigungsmittel zum Befestigen elektrischer Installationen an der Installationsdose. Die Befestigungsmittel können u.a. dazu dienen um Installationsgeräte, beispielsweise Schalter, Tastschalter, Steckdosen oder dergleichen an einer solchen Installationsdose zu befestigen, bzw. in dieser einbauen zu können. Das Positioniermittel kann eine Kerbe oder Rippe oder eine Markierung (z.B. ein Strich) sein. Mit Vorteil ist das Positioniermittel auf der Aussenseite der Seitenwand angeordnet. Das Befestigungsmittel ist mit Vorteil mindestens eine Befestigungsöffnung (z.B. ein Sacklock), welches in die axiale Richtung verläuft mit einer darin befestigbaren Schraube. Jedoch sind auch weitere form- und/oder kraftschlüssige Befestigungsmittel wie beispielsweise Rastelemente denkbar. Die Befestigungsmittel sind mit Vorteil innerhalb einer Kontur der Seitenwand angeordnet. Das Positioniermittel kann alternativ auch als eine Kerbe oder eine Markierung auf einem Verankerungselement ausgeführt sein. Mit Vorteil sind die Verankerungselemente, welche Positioniermittel aufweisen, diejenigen Verankerungselemente welche in die axiale Richtung dem Dosenboden am nächsten sind. Mit Vorteil sind mehrere Verankerungselemente mit Positioniermittel an dergleichen axialen Position an der Aussenseite positioniert. Wenn zwei Dichtungen vorhanden sind, ist das Positioniermittel mit Vorteil in axialer Richtung (von der Installationsöffnung weg) hinter beiden Dichtungen angeordnet.

Mit Vorteil ist die Installationsdose aus zwei unterschiedlichen Kunststoffen durch Spritzguss hergestellt. Der erste Kunststoff des Dosenkörpers ist mit Vorteil härter als der weichelastische Kunststoff der mindestens einen Dichtung. Ebenfalls können weitere Teile der Installationsdose aus dem zweiten weichelastischen Kunststoff bestehen. Ein Steg aus dem zweiten, weichelastischen Kunststoff kann sich vom Dosenboden entlang der Seitenwand bis zur mindestens einen Dichtung erstrecken.

Je nach Ausgestaltung und Anwendung kann die Installationsdose mindestens eine Rohröffnung zum Einführen eines Elektrorohres oder Kabelschlauches in den Installationsraum aufweisen. Diese ist mit Vorteil in einem initialen Zustand vor der Montage von einem heraustrennbaren Bereich verschlossen. Der heraustrennbare Bereich kann eine (erste) Membran umfassen. Die Membran kann aus dem gleichen weichelastischen Kunststoff wie die mindestens eine Dichtung geformt sein. Der oben beschriebene mindestens eine Steg aus weichelastischem Material kann sich je nach Ausgestaltung ebenfalls von der Membran zur mindestens einen Dichtung erstrecken, sodass sich der weichelastische zweite Kunststoff von dem Dosenboden über die Seitenwand bis zu der mindestens einen Dichtung, bzw. wenn vorhanden zu beiden Dichtungen, erstreckt.

Je nach Anwendung kann die erste Membran zumindest bereichsweise von einer zweiten Membran umgeben sein. Mit Vorteil ist die zweite Membran jedoch ringförmig ausgebildet und umgibt die erste Membran. Während der heraustrennbare Bereich (respektive die erste Membran) zum Entfernen durch mechanisches Einwirken vorgesehen ist, ermöglicht die zweite äussere Membran eine gewisse Richtungsflexibilität bezüglich der Ausrichtung des durchzusteckenden Rohres. Durch das Heraustrennen der ersten Membran entsteht eine flexible, dehnbare Einführungsöffnung zum Einführen von Elektrorohren oder Kabelschutzschläuchen mit unterschiedlichen Durchmessern in die Installationsdose. Die Einführungsöffnung kann sich zudem flexibel an unterschiedliche Rohrdurchmesser anpassen. Für das einfache Heraustrennen der ersten Membran kann zwischen der ersten und der zweiten Membran eine umlaufende Dünnstelle vorgesehen sein. Die Dünnstelle kann ebenfalls aus dem weichelastischen zweiten Kunststoff bestehen. Um nach dem Öffnen ein ungewolltes Einreissen der zweiten Membran beim Einführen eines Elektrorohres zu vermeiden, kann die zweite Membran mindestens eine um die erste Membran umlaufende Wulst, respektive eine lokale Verdickung, umfassen. Diese Wulst kann direkt entlang der Dünnstelle oder in einem gewissen Abstand dazu angeordnet sein, um eine Dichtlippe auszubilden, welche gegenüber dem Elektrorohr abdichtet. Die erste Membran kann zudem mit Vorteil eine auf der Dosenaussenseite angeformte, nach aussen vorstehende Abreisslasche aufweisen, welche zum Heraustrennen der ersten Membran dient. Während die Abreisslasche auf der Aussenseite angebracht ist, ist die Dünnstelle bevorzugter Weise auf einer Innenseite angeordnet. Dies hat den Vorteil, dass die Dimensionierung der Dünnstelle losgelöst von der auf der Aussenseite angeformten Abreisslasche vorgenommen werden kann und damit deutlich einfacher einstellbar ist. Eine mindestens eine umlaufende Wulst kann auf der Membranaussenseite und/oder auf der Membraninnenseite angeordnet sein.

Ein Verfahren zur Montage einer Installationsdose in einen Wandausschnitt einer Hohlwand kann die folgenden Schritte umfassen: Bereitstellen einer Installationsdose, wie oben beschrieben. Einstecken der Installationsdose vom Dosenboden bis zum in der axialen Richtung nächsten Verankerungselement, wobei die Installationsdose in die radiale Richtung in dem Wandausschnitt, insbesondere mittels Klemmrippen, verklemmt wird. Radiales Positionieren der Installationsdose in dem Wandausschnitt, mit Vorteil mittels Positioniermitteln. Versenken der Installationsdose in den Wandausschnitt bis zum Rand, sodass der Rand auf einer dem Wandausschnitt umgebenden Wandoberfläche zu liegen kommt und die Verankerungselemente die Installationsdose in dem Wandausschnitt axial und radial verankern.

### FIGURENBESCHREIBUNG

Anhand der in den nachfolgenden Figuren gezeigten Ausführungsbeispiele und der dazugehörigen Beschreibung werden Aspekte der Erfindung näher erläutert. Es zeigen:
- Fig. 1: Eine perspektivische Ansicht einer Variante einer Installationsdose; Diese Variante ist nicht erfindungsgemäß und dient lediglich der Veranschaulichung.
- Fig. 2: Eine Rückansicht auf die Installationsdose gemäss Figur 1;
- Fig. 3: Eine Frontansicht auf die Installationsdose gemäss Figur 1 und in den Installationsraum der Installationsdose;
- Fig. 4: Eine Schnittansicht A-A der Installationsdose gemäss Figur 2;
- Fig. 5: Eine Detailansicht der Seitenwand gemäss Figur 4.;
- Fig. 6: Eine perspektivische Ansicht einer erfindungsgemässen Variante einer Installationsdose.

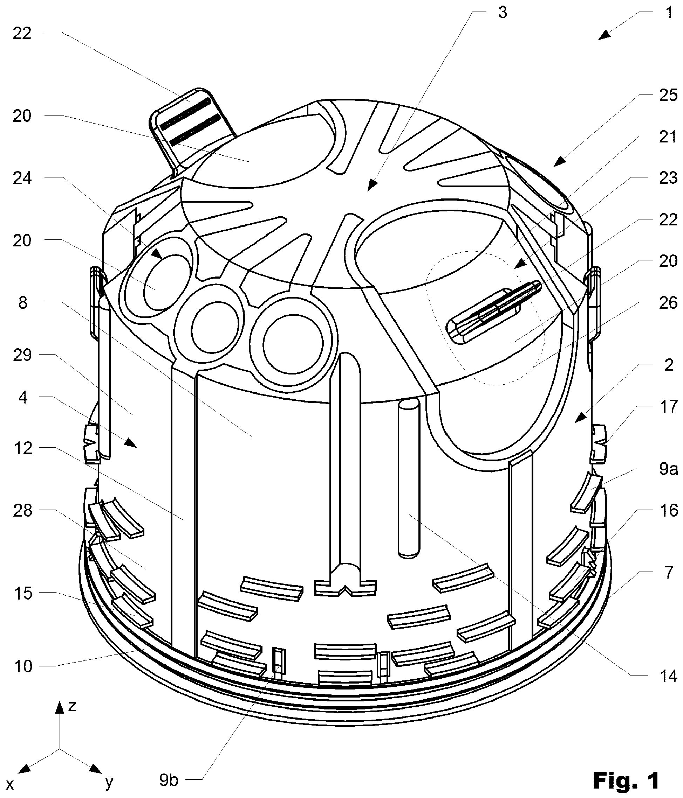

**Figur 1 bis Figur 5** zeigen eine Variante einer Installationsdose 1 nicht gemäss der Erfindung mit einem Dosenkörper 2 aus einem ersten Kunststoff. Der Dosenkörper 2 umfasst einen Dosenboden 3 mit einer daran über einen Übergangsbereich 25 übergehenden röhrenförmigen Seitenwand 4, welche sich in eine axiale Richtung (z-Richtung) erstreckt. Der Dosenkörper 2 umgibt einen Installationsraum 6. Der Installationsraum 6 ist über eine dem Dosenboden 3 gegenüberliegenden Installationsöffnung 5 zugänglich, welche von einem von der Seitenwand 4 radial nach aussenstehenden Rand 7 begrenzt ist. Die Installationsdose 1 umfasst weiter mehrere in der Nähe des Randes 7 angeordnete und von der Aussenseite 8 der Seitenwand 4 abstehende Verankerungselemente 9 zum Befestigen der Installationsdose 1 in einer Wandöffnung. Die Verankerungselemente 9 sind über den Umfang der Seitenwand 4 verteilt angeordnet. Für den Einsatz in Hohlwänden ist es vorteilhaft, wenn die Verankerungselemente 9 in der Nähe des Randes 7, d.h. in einem zur Installationsöffnung 5 hingewandten vorderseitigen Bereich 28 der Aussenseite 8 angeordnet sind. Zwischen dem Rand 7 und den Verankerungselementen 9 ist weiterhin eine entlang dem Rand 7 verlaufende (erste) Dichtung 10, zum Abdichten des Dosenkörpers 2 bezüglich der Wandöffnung vorhanden. Die Verankerungselemente 9 sind (im vorderseitigen Bereich 28) über die Aussenseite 8 der Seitenwand 4 verteilt angeordnet. Die über den Umfang der Seitenwand 4 verteilten Verankerungselemente 9 sind in unterschiedlichen Reihen 15, 16 angeordnet. Jede Reihe 15, 16 von Verformungselementen 9 ist an einer unterschiedlichen axialen Position angeordnet. Die Verformungselemente 9 der jeweiligen Reihen 15, 16 sind mit Vorteil zueinander umfangsseitig versetzt angeordnet. In **Figur 1** ist ersichtlich, dass die Dichte an Verankerungselementen 9 von der Installationsöffnung 5 weg abnimmt.

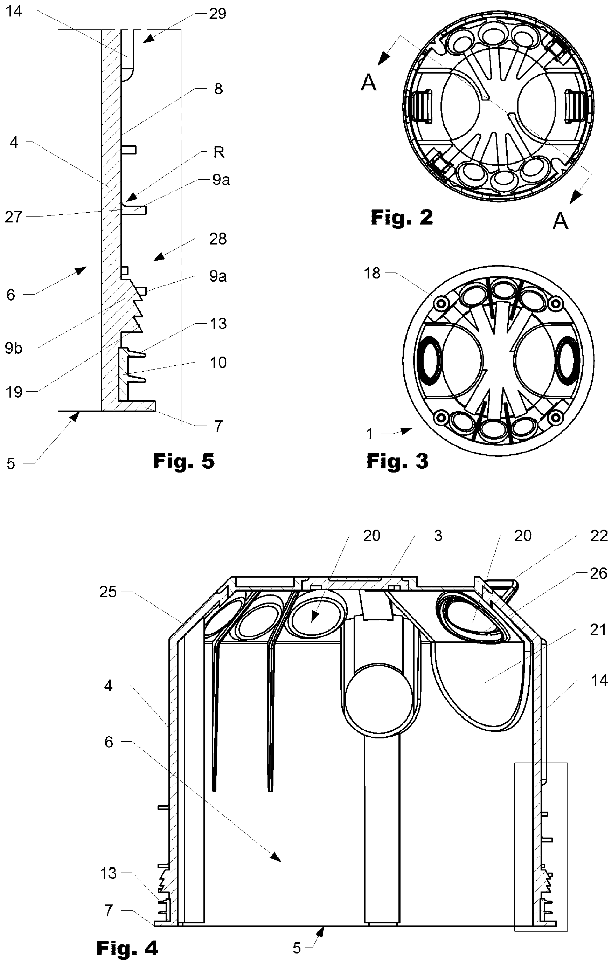

In der gezeigten Ausführungsform sind zwei unterschiedliche Arten von Verankerungselementen 9a, 9b zu sehen. Jedoch können beliebig viele Arten verwendet werden. Die ersten Verankerungselemente 9a stehen in der gezeigten Ausführungsform senkrecht von der Aussenseite 8 der Seitenwand 4 ab und erstrecken sich dünnwandig in einer Ebene parallel zur Installationsöffnung 5. Jedoch sind auch andere lamellenartige Ausgestaltungen denkbar. Bei der Montage in der Wandöffnung verformen sich die Verankerungselemente 9a unter Krafteinwirkung plastisch und/oder elastisch zu der Installationsöffnung 5 hin und bilden einen Widerhaken, sodass ein Entfernen bzw. Herausrutschen der Installationsdose 1 aus der Wandöffnung erschwert wird. Für die Verformung der Verankerungselemente 9a weist dieses mit Vorteil je einen dafür designierten Verformungsbereich auf. Dieser ist mit Vorteil an der Basis 27 des Verankerungselementes 9a angeordnet. Um die Verformung weiter zu begünstigen kann die Basis 27 des Verankerungselementes 9a derart ausgestaltet sein, dass die Kante, an der das Verankerungselement 9a an die Seitenwand 4 übergeht auf einer von der Installationsöffnung 5 wegweisenden Seite einen grösseren Radius R aufweist als an einer zu der Installationsöffnung 5 hingewandten Seite, wie in dem Detailausschnitt in **Figur 5** ersichtlich. Ebenfalls sind zweite Verankerungselemente 9b vorhanden, welche sich in die axiale Richtung erstrecken. Diese weisen zusätzlich eine an einer von der Seitenwand 4 abgewandten äusseren Kante Sägezähne 19 auf um einen guten Halt, respektive eine gute Verankerung, in der Wand zu ermöglichen.

Ebenfalls in **Figur 5** ersichtlich ist, dass die Verankerungselemente 9a, 9b in die radiale Richtung nicht weiter nach aussen abstehen als der Rand 7 der Installationsdose 1. Im rückseitigen Bereich 29 der Aussenseite 8 der Seitenwand 4, welcher zwischen dem Dosenboden 3 und dem vorderseitigen Bereich 28 angeordnet ist, sind mehrere Klemmrippen 14 angeordnet. Die Klemmrippen 14 erstrecken sich entlang der Seitenwand 4 in axiale Richtung. Die Verankerungselemente 9a, 9b erstrecken sich in die radiale Richtung weiter über eine Kontur der Aussenseite 8 als die mindestens eine Klemmrippe 14. Besonders vorteilhaft ist, wenn sich jedoch der Rand 7 der Installationsdose 1 in die radiale Richtung weiter über die Kontur der Aussenseite 8 erstreckt als die mindestens eine Klemmrippe 14.

in **Figur 1** ist ersichtlich, dass die Installationsdose 1 zudem Positioniermittel 17 umfasst. In der gezeigten Variante sind die Positioniermittel 17 je auf einem (ersten) Verankerungselement 9a angebracht. Jedoch sind auch andere Ausgestaltungen, wie beispielsweise eine Kerbe oder eine Markierung auf der Seitenwand, möglich. Die Verankerungselemente 9a, welche Positioniermittel 17 aufweisen, sind auf einer in der axialen Richtung letzten Reihe angebracht, welche am nächsten an dem Dosenboden 3 angeordnet ist. Die Positioniermittel 17 sind zudem in Bezug auf den Umfang an der gleichen Position wie ein Befestigungsmittel 18 angeordnet (vgl. **Figur 3**)**.** Die Befestigungsmittel 18 dienen zum Befestigen elektrischer Installationen an der Installationsdose 1. Das Befestigungsmittel 18 ist in der gezeigten Variante eine in die axiale Richtung verlaufende Befestigungsöffnung mit einer darin befestigbaren Schraube.

In **Figur 1** ist zu sehen, dass die Installationsdose 1 zwei Membrane 20, 21 aufweist, welche sich gemeinsam über den Dosenboden 3, den Übergangsbereich 25 und Teile der Seitenwand 4 erstrecken. Die erste Membran 20 verschliesst in einem initialen Zustand eine Rohröffnung 23, welche zum Einführen eines Elektrorohres oder eines Kabelschlauchs gedacht ist. Die erste Membran 20 kann herausgetrennt werden um die Rohröffnung 23 freizugeben. An der Aussenseite 8 der ersten Membran 20 ist eine Lasche 22 zum Heraustrennen der ersten Membran 20 vorhanden. Zwischen der ersten und der zweiten Membran 20, 21 ist zudem eine Dünnstelle 26 vorhanden, entlang welcher die erste Membran 20 herausgetrennt werden kann. Die ringförmige zweite Membran 21 ermöglicht eine gewisse Richtungsflexibilität bezüglich der Ausrichtung des durchzusteckenden Rohres. Neben den Rohröffnungen 23 können weitere Einführöffnungen 24 für beispielsweise Kabel o.ä. vorhanden sein. Diese können ebenfalls durch eine (erste) Membran 20 aus dem gleichen Material wie die zuvor beschriebene Membran der Rohröffnung 23 verschlossen sein. Je nach Anwendung, kann eine diese umgebende zweite Membran 21 vorhanden sein, oder nicht.

In axialer Richtung zwischen den Verankerungselementen 9 und dem Rand 7 der Installationsdose 1 ist eine (erste) Dichtung 10 angeordnet. Die Dichtung 10 umfasst in der gezeigten Variante zwei bezüglich der Seitenwand 4 umlaufende Lamellen 13. Die Lamellen 13 erstrecken sich in axiale Richtung weiter als die Verankerungselemente 9. Die Dichtung 10 besteht mit Vorteil ebenfalls aus dem zweiten, weichelastischen Kunststoff. Die Dichtung 10 ist in der gezeigten Ausführungsform über einen Steg 12 ebenfalls aus dem zweiten, weichelastischen Kunststoff mit dem Dosenboden 3 verbunden. Bei einem zwei Komponenten Spitzgussverfahren wird die zweite weichelastische Kunststoffkomponenten von einem Anspritzpunkt über den Steg 12 und gegebenenfalls über die Membrane 20 entlang der Seitenwand 4 bis zur Dichtung 10 verteilt.

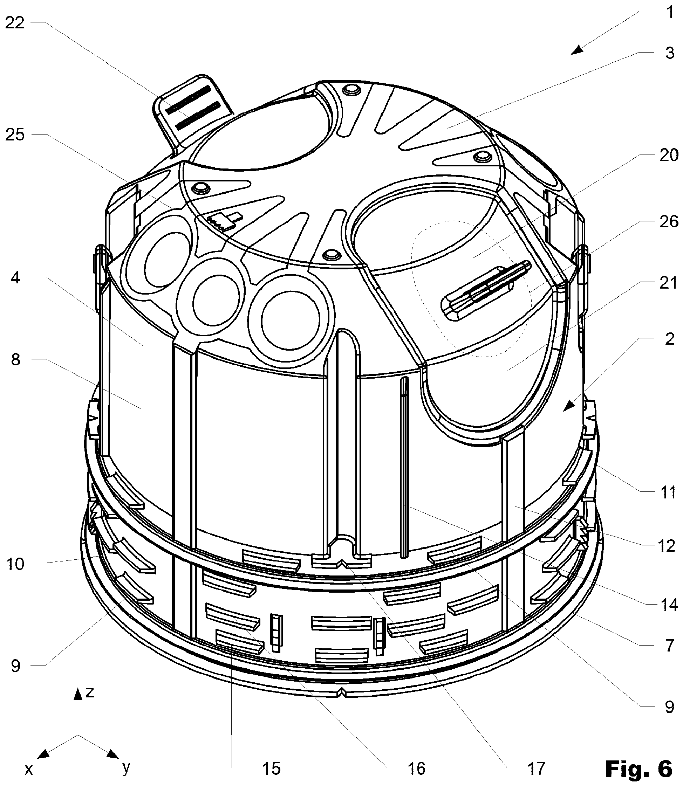

**Figur 6** zeigt eine perspektivische Ansicht einer erfindungsgemässen Variante einer Installationsdose. Diese Variante der Installationsdose unterscheidet sich zu der in **Figur 1 - 5** erläuterten ersten Variante dadurch, dass die zweite erfindungsgemässe Variante der Installationsdose 1 zwei Dichtungen 10,11 entlang der Seitenwand 4 der Installationsdose 1 aufweist. Die beiden Dichtungen 10, 11 sind zueinander beabstandet. Zwischen den beiden Dichtungen 10, 11, welche je mehrere Lamellen 13 aufweisen, sind multiple Verankerungselemente 9 über den Umfang der Installationsdose 1 angebracht. Die zwischen den beiden Dichtungen 10, 11 verteilten Verankerungselemente 9 bilden zudem mindestens zwei Reihen 15, 16 von Verankerungselementen 9, wie oben beschrieben. Der zuvor beschriebene Steg 12 aus weichelastischem Material verläuft in axialer Richtung entlang der Seitenwand 4 und verbindet die beiden Dichtungen 10, 11 miteinander. Der Vorteil dieser zweiten Variante der erfindungsgemässen Installationsdose 1 ist, dass diese bei der Verwendung in einer zweischichtigen Hohlwand aus beispielsweise einer ersten Schicht aus Gipskarton und einer zweiten Schicht aus Holz besser in der Wand hält und die Installationsdose in Bezug zu der Wandöffnung (in welcher diese angebracht ist) verlässlicher abdichtet. Die verbesserte Dichtwirkung wird hierbei durch die in axialer Richtung beabstandeten Dichtungen 10, 11 erzeugt, da die erste Dichtung 10 die Installationsdose gegen eine erste Schicht der Hohlwand abdichtet und die zweite Dichtung 11 die Installationsdose gegen die unter der ersten Schicht liegende zweite Schicht abdichtet.

### LISTE DER BEZUGSZEICHEN

| | | | |
|---|---|---|---|
| 1 | Installationsdose | 16 | Zweite Reihe |
| 2 | Dosenkörper | 17 | Positioniermittel |
| 3 | Dosenboden | 18 | Befestigungsmittel |
| 4 | Seitenwand | 19 | Sägezähne |
| 5 | Installationsöffnung | 20 | (Erste) Membran |
| 6 | Installationsraum | 21 | Zweite Membran |
| 7 | Rand | 22 | Lasche |
| 8 | Aussenseite | 23 | Rohröffnung |
| 9 | Verankerungselement | 24 | Einführöffnung |
| 10 | Erste Dichtung | 25 | Übergangsbereich |
| 11 | Zweite Dichtung | 26 | Dünnstelle |
| 12 | Steg | 27 | Basis |
| 13 | Dichtlamelle | 28 | Vorderseitiger Bereich |
| 14 | Klemmrippe | 29 | Rückseitiger Bereich |
| 15 | Erste Reihe | | |

## Patentansprüche

1. Installationsdose (1) fürelektrotechnische Installationen mit
a. einem Dosenkörper (2) aus einem ersten Kunststoff mit
i. einem Dosenboden (3), welcher in eine röhrenförmige Seitenwand (4) übergeht, welche sich in axialer Richtung (z) erstreckt und einen Installationsraum (6) umgibt,
ii. einer Installationsöffnung (5), welche dem Dosenboden (3) gegenüberliegend angeordnet ist und von einem radial nach aussen vorstehenden Rand (7) der Seitenwand (4) begrenzt ist;
b. eines oder mehrere in der Nähe des Randes (7) angeordnete, von der Aussenseite (8) der Seitenwand (4) abstehende und über den Umfang der Seitenwand (4) verteilte Verankerungselemente (9) zum Befestigen der Installationsdose (1) in einer Wandöffnung,wobei die Verankerungselemente (9)
i. aus dem ersten Kunststoff bestehen oder ergänzend einen zweiten weichelastischen Kunststoff umfassen und
ii. unter Krafteinwirkung zumindest bereichsweise plastisch verformbar sind;
c. mindestens einer entlang der Seitenwand (4) verlaufenden Dichtung (10, 11) zum Abdichten des Dosenkörpers (2) bezüglich der Wandöffnung **dadurch gekennzeichnet, dass** mindestens eine Dichtung (11) zu dem Rand (7) beabstandet ist und die Installationsdose (1) zwischen dem Rand (7) und dieser Dichtung (11) Verankerungselemente (9) aufweist.

2. Installationsdose (1) gemäss Patentanspruch 1, **dadurch gekennzeichnet, dass** die mindestens eine Dichtung (10, 11) aus dem zweiten, weichelastischen Kunststoff besteht.

3. Installationsdose (1) gemäss Patentanspruch 2, **dadurch gekennzeichnet, dass** ein Steg (12) aus dem zweiten, weichelastischen Kunststoff sich vom Dosenboden (3) entlang der Seitenwand (4) bis zur mindestens einen Dichtung (10, 11) erstreckt.

4. Installationsdose (1) gemäss einem der vorangehenden Patentansprüche, **dadurch gekennzeichnet, dass** die mindestens eine Dichtung (10, 11) aus mindestens einer bezüglich der Seitenwand umlaufenden Lamelle (13) besteht.

5. Installationsdose (1) gemäss einem der vorangehenden Patentansprüche, **dadurch gekennzeichnet, dass** die Installationsdose (1) mindestens zwei in axialer Richtung (z) zueinander beabstandete Dichtungen (10, 11) aufweist.

6. Installationsdose (1) gemäss Patentanspruch 5, **dadurch gekennzeichnet, dass** eine der zwei zueinander beabstandeten Dichtungen (10) entlang des Randes (7) angeordnet ist.

7. Installationsdose (1) gemäss einem der vorangehenden Patentansprüche, **dadurch gekennzeichnet, dass** die Verankerungselemente (9) so ausgebildet sind, dass sie in einem montierten Zustand der Installationsdose (1) einen Widerhaken in der Wand in die axiale Richtung und in Richtung der Installationsöffnung (6) ausbilden.

8. Installationsdose (1) gemäss einem der vorangehenden Patentansprüche, **dadurch gekennzeichnet, dass** die Verankerungselemente (9) lamellenartig und/oder keilförmig und/oder mit mindestens einem Sägezahn (19) ausgebildet sind.

9. Installationsdose (1) gemäss einem der vorangehenden Patentansprüche, **dadurch gekennzeichnet, dass** die Verankerungselemente (9) unter Krafteinwirkung zumindest bereichsweise elastisch verformbar sind.

10. Installationsdose (1) gemäss einem der vorangehenden Patentansprüche, **dadurch gekennzeichnet, dass** die Verankerungselemente (9) in mindestens zwei in axialer Richtung voneinander beabstandeten Reihen (15, 16) angeordnet sind und die Anzahl von Verankerungselemente (9) pro Reihe (15, 16) in axialer Richtung von der Installationsöffnung (5) weg abnimmt.

11. Installationsdose (1) gemäss einem der vorangehenden Patentansprüche, **dadurch gekennzeichnet, dass** die Installationsdose (1) mindestens eine sich in die axiale Richtung erstreckende Klemmrippe (14) umfasst.

12. Installationsdose (1) gemäss Patentanspruch 11, **dadurch gekennzeichnet, dass** die mindestens eine Klemmrippe (14) zwischen den Verankerungselementen (9) und dem Dosenboden (3) angeordnet ist.

13. Installationsdose (1) gemäss einem der Patentansprüche 11 oder 12, **dadurch gekennzeichnet, dass** die Verankerungselemente (9) sich in eine radiale Richtung weiter über eine Kontur der Aussenseite (8) erstrecken als die mindestens eine Klemmrippe (14).

14. Installationsdose (1) gemäss einem der Patentansprüche 11 bis 13, **dadurch gekennzeichnet, dass** sich der Rand (7) der Installationsdose (1) in die radiale Richtung weiter über die Kontur der Aussenseite (8) erstreckt als die mindestens eine Klemmrippe (14)

15. Installationsdose (1) gemäss einem der vorangehenden Patentansprüche, **dadurch gekennzeichnet, dass** die Installationsdose (1) mindestens ein Positioniermittel (17) zum Ausrichten der Installationsdose (1) in einer Wandöffnung umfasst.

16. Installationsdose (1) gemäss Patentanspruch 11 und 15, **dadurch gekennzeichnet, dass** das mindestens eine Positioniermittel (17) auf der Aussenseite (8) zwischen der Klemmrippe (14) und dem mindestens einem Verankerungselement (9) angeordnet ist.

17. Installationsdose (1) gemäss Patentanspruch 15 oder 16, **dadurch gekennzeichnet, dass** das mindestens eine Positioniermittel (17) in Bezug auf dem Umfang an der gleichen Position angeordnet ist, wie ein Befestigungsmittel (18) zum Befestigen elektrischer Installationen an der Installationsdose (1).

## Claims

1. Installation box (1) for electrical installations with
a. a box body (2) made of a first plastic material with
i. a box base (3) which merges into a tubular side wall (4) which extends in the axial direction (z) and surrounds an installation space (6),
ii. an installation opening (5), which is arranged opposite the box base (3) and is bounded by a radially outwardly projecting edge (7) of the side wall (4);
b. one or more anchoring elements (9) arranged in the vicinity of the edge (7), projecting from the outside (8) of the side wall (4) and distributed over the circumference of the side wall (4) for fastening the installation box (1) in a wall opening, wherein the anchoring elements (9)
i. consist of the first plastic or additionally comprise a second soft-elastic plastic and
ii. are plastically deformable under the effect of force, at least in certain areas;
c. at least one seal (10, 11) extending along the side wall (4) for sealing the box body (2) with respect to the wall opening, **characterized in that** at least one seal (11) is spaced from the edge (7) and the installation box (1) has anchoring elements (9) between the edge (7) and the seal (11).

2. Installation box (1) according to claim 1, **characterized in that** at least one seal (10, 11) consists of the second, soft-elastic plastic.

3. Installation box (1) according to claim 2, **characterized in that** a bridge (1 2) of the second, soft-elastic plastic extends from the box base (3) along the side wall (4) to the at least one seal (10, 11).

4. Installation box (1) according to one of the preceding claims, **characterized in that** at least one seal (10, 11) consists of at least one circumferential lamella (13) with respect to the side wall.

5. Installation box (1) according to one of the preceding claims, **characterized in that** the installation box (1) has at least two seals (10, 11) spaced apart from one another in the axial direction (z).

6. Installation box (1) according to claim 5, **characterized in that** one of the two seals (10) spaced apart from each other is arranged along the edge (7).

7. Installation box (1) according to one of the preceding claims, **characterized in that** the anchoring elements (9) are designed in such a way that, in a mounted state of the installation box (1), they form a barb in the wall in the axial direction and in the direction of the installation opening (6).

8. Installation box (1) according to one of the preceding claims, **characterized in that** the anchoring elements (9) are lamellar and/or wedge-shaped and/or have at least one saw tooth (19) form.

9. Installation box (1) according to one of the preceding claims, **characterized in that** the anchoring elements (9) are elastically deformable under the action of force, at least in certain areas.

10. Installation box (1) according to one of the preceding claims, **characterized in that** the anchoring elements (9) are arranged in at least two rows (15, 16) spaced apart from one another in the axial direction and the number of anchoring elements (9) per row (15, 16) decreases in the axial direction away from the installation opening (5).

11. Installation box (1) according to one of the preceding claims, **characterized in that** the installation box (1) comprises at least one clamping rib (14) extending in the axial direction.

12. Installation box (1) according to claim 11, **characterized in that** at least one clamping rib (14) is arranged between the anchoring elements (9) and the box base (3).

13. Installation box (1) according to one of the claims 11 or 12, **characterized in that** the anchoring elements (9) extend in a radial direction further over a contour of the outer side (8) than the at least one clamping rib (14).

14. Installation box (1) according to one of the claims 11 to 13, **characterized in that** the edge (7) of the installation box (1) extends in the radial direction further over the contour of the outer side (8) than the at least one clamping rib (14).

15. Installation box (1) according to one of the preceding claims, **characterized in that** the installation box (1) comprises at least one positioning means (17) for aligning the installation box (1) in a wall opening.

16. Installation box (1) according to claims 11 and 15, **characterized in that** at least one positioning means (17) is arranged on the outside (8) between the clamping rib (14) and at least one anchoring element (9).

17. Installation box (1) according to claim 1 5 or 16, **characterized in that** the at least one positioning means (17) is arranged at the same position in relation to the circumference as a fastening means (18) for fastening electrical installations to the installation box (1).

## Revendications

1. Boîte d'installation (1) pour installations électrotechniques avec
a. un corps de boîte (2) en une première matière plastique avec
i. un bas de boîte (3) qui se transforme en une paroi latérale tubulaire (4) qui s'étend dans la direction axiale (z) et qui entoure un espace d'installation (6),
ii. une ouverture d'installation (5) qui est disposée en face du fond de boîte (3) et qui est délimitée par un bord (7) de la paroi latérale (4) faisant saillie radialement vers l'extérieur ;
b. un ou plusieurs éléments d'ancrage (9) disposés à proximité du bord (7), dépassant de la face extérieure (8) de la paroi latérale (4) et répartis sur la périphérie de la paroi latérale (4), pour fixer la boîte d'installation (1) dans une ouverture murale, les éléments d'ancrage (9) étant
i. se composent de la première matière plastique ou comprennent en complément une deuxième matière plastique souple et élastique, et
ii. sont déformables plastiquement, au moins par zones, sous l'effet d'une force ;
c. au moins un joint d'étanchéité (10, 11) s'étendant le long de la paroi latérale (4) pour rendre étanche le corps de boîte (2) par rapport à l'ouverture de paroi, **caractérisé en ce qu'**au moins un joint d'étanchéité (11) est espacé du bord (7) et la boîte d'installation (1) présente des éléments d'ancrage (9) entre le bord (7) et ce joint d'étanchéité (11).

2. Boîte d'installation (1) selon la revendication 1, **caractérisée en ce que** le au moins un joint d'étanchéité (10, 11) est constitué de la deuxième matière plastique souple et élastique.

3. Boîte d'installation (1) selon la revendication 2, **caractérisée en ce qu'**une nervure (12) en la deuxième matière plastique élastique souple s'étend du fond de la boîte (3) le long de la paroi latérale (4) jusqu'à au moins un joint (10, 11).

4. Boîte d'installation (1) selon l'une des revendications précédentes, **caractérisée en ce que** le au moins un joint d'étanchéité (10, 11) est constitué d'au moins une lamelle (13) s'étendant tout autour de la paroi latérale.

5. Boîte d'installation (1) selon l'une des revendications précédentes, **caractérisée en ce que** la boîte d'installation (1) présente au moins deux joints d'étanchéité (10, 11) espacés l'un de l'autre dans la direction axiale (z).

6. Boîte d'installation (1) selon la revendication 5, **caractérisée en ce que** l'un des deux joints d'étanchéité (10) espacés l'un de l'autre est disposé le long du bord (7).

7. Boîte d'installation (1) selon l'une des revendications précédentes, **caractérisée en ce que** les éléments d'ancrage (9) sont conçus de telle sorte que, dans un état monté de la boîte d'installation (1), ils forment un crochet dans le mur dans la direction axiale et en direction de l'ouverture d'installation (6).

8. Boîte d'installation (1) selon l'une des revendications précédentes, **caractérisée en ce que** les éléments d'ancrage (9) sont conçus en forme de lamelles et/ou de coin et/ou avec au moins une dent de scie (19).

9. Boîte d'installation (1) selon l'une des revendications précédentes, **caractérisée en ce que** les éléments d'ancrage (9) sont déformables élastiquement au moins par zones sous l'effet d'une force.

10. Boîte d'installation (1) selon l'une des revendications précédentes, **caractérisée en ce que** les éléments d'ancrage (9) sont disposés en au moins deux rangées (15, 16) espacées l'une de l'autre dans la direction axiale et le nombre d'éléments d'ancrage (9) par rangée (15, 16) diminue dans la direction axiale en s'éloignant de l'ouverture d'installation (5).

11. Boîte d'installation (1) selon l'une des revendications précédentes, **caractérisée en ce que** la boîte d'installation (1) comprend au moins une nervure de serrage (14) s'étendant dans la direction axiale.

12. Boîte d'installation (1) selon la revendication 11, **caractérisée en ce que** la au moins une nervure de serrage (14) est disposée entre les éléments d'ancrage (9) et le bas de la boîte (3).

13. Boîte d'installation (1) selon l'une des revendications 11 ou 12, **caractérisée en ce que** les éléments d'ancrage (9) s'étendent dans une direction radiale plus loin sur un contour de la face extérieure (8) que la au moins une nervure de serrage (14).

14. Boîte d'installation (1) selon l'une des revendications 11 à 13, **caractérisée en ce que** le bord (7) de la boîte d'installation (1) s'étend dans la direction radiale plus loin sur le contour de la face extérieure (8) que la au moins une nervure de serrage (14).

15. Boîte d'installation (1) selon l'une des revendications précédentes, **caractérisée en ce que** la boîte d'installation (1) comprend au moins un moyen de positionnement (17) pour orienter la boîte d'installation (1) dans une ouverture murale.

16. Boîte d'installation (1) selon les revendications 11 et 15, **caractérisée en ce que** le au moins un moyen de positionnement (17) est disposé sur le côté extérieur (8) entre la nervure de serrage (14) et le au moins un élément d'ancrage (9).

17. Boîte d'installation (1) selon la revendication 15 ou 16, **caractérisée en ce que** ledit au moins un moyen de positionnement (17) est disposé dans la même position circonférentielle qu'un moyen de fixation (18) pour fixer des installations électriques à la boîte d'installation (1).
